# EUROPÄISCHE PATENTANMELDUNG

(11) **EP 3 320 816 A1**
(43) Veröffentlichungstag der Anmeldung: **16.05.2018**
(21) Anmeldenummer: 17001381.7
(22) Anmeldetag: 13.08.2017
(51) Int. Cl.: A47J 36/12, A47J 36/06, A47J 27/56

(54) **DECKEL FÜR EIN KOCHGEFÄSS ODER EINEN KOCHTOPF**

(30) Priorität: 13.08.2016 DE 102016010060; 23.03.2017 DE 202017001562 U
(71) Anmelder: Kraft, Benedikt Thomas, 83022 Rosenheim (DE)
(72) Erfinder: Kraft, Benedikt Thomas, 83022 Rosenheim (DE)

(57) **Zusammenfassung**

Die vorliegende Erfindung betrifft einen Deckel für ein Kochgefäß, insbesondere einen Deckel, der beim Aufliegen auf das Kochgefäß nicht in die waagrechte bzw. geschlossene Stellung zurück rutscht und ein Kochgefäß mit einem derartigen Deckel.

## Beschreibung

Die vorliegende Erfindung betrifft einen Deckel für ein Kochgefäß, insbesondere einen Deckel, der beim Aufliegen auf das Kochgefäß nicht in die waagrechte bzw. geschlossene Stellung zurück rutscht und ein Kochgefäß mit einem derartigen Deckel.

### Stand der Technik

Häufig wird beim Kochen von Nudeln, Kartoffeln, Reis, Kuskus, oder ähnlichem, in einem Kochtopf, oder ähnlichem, kein Deckel verwendet, um ein Überkochen zu verhindern bzw. zu vermeiden. In diesem Fall geht jedoch über die obere Öffnung des Kochtopfs durch die erwärmte Luft und entstehenden Wasserdampf ein großer Teil der zum Kochen aufgewendeten Energie verloren, was zu Energieverschwendung führt.

Alternativ kann der Deckel, der meistens aus Metall und/oder aus Glas gefertigt ist, schräg bzw. angewinkelt und versetzt auf den Kochtopf gelegt werden, um die obere Öffnung wenigstens teilweise zu bedecken und somit zu erlauben, Dampf seitlich, durch den zwischen Kochtopf und Deckel entstehenden Spalt, entweichen zu lassen. Nachteilig ist hier, dass dann, wenn das Kochmedium, meistens in Form von Wasser, von einem siedenden in einen sprudelnden bzw. schäumenden Zustand wechselt, und das Kochmedium dann bis zur Deckelunterseite aufsteigt und diese verunreinigt und austritt und den Herd verunreinigt. Außerdem ist in dem kochenden Wasser meist Stärke aus dem Kochgut gelöst, welche sowohl den Deckel als auch den Herd verunreinigt. Ferner wird der Deckel durch den von unten entstehenden Druck des Kochmediums bewegt bzw. in Vibration versetzt, sodass der Deckel in die geschlossene Position zurückversetzt wird, d.h. in die Position, in der der Deckel komplett ohne Spalt auf dem Kochtopf aufliegt. Dadurch wird wiederum ein Überkochen verursacht und erhöhter Putzaufwand erzeugt.

Andererseits ist es gerade gewünscht, dass sich das Kochmedium, meistens Wasser, in einem sprudelnden bzw. schäumenden Zustand befindet, da in diesem Fall die Kochzeit minimal ist. D.h., die genannten Probleme und Nachteile treten immer im für eine kurze Kochzeit optimalen Fall ein.

### Kurzbeschreibung der Figuren

Fig. 1 ist eine Querschnittsansicht eines Deckels gemäß einer Ausführungsform, die den Deckel in einer waagrechten Position beim Aufliegen auf einem Kochgefäß zeigt.
Fig. 2 ist eine Querschnittsansicht eines Deckels gemäß einer Ausführungsform, die den Deckel in einer geneigten Position beim Aufliegen auf einem Kochgefäß zeigt.
Fig. 3A/B ist eine Draufsicht eines Deckels gemäß einer Ausführungsform.
Fig. 4 ist eine Draufsicht eines Deckels gemäß einer anderen Ausführungsform.
Fig. 5 ist eine Draufsicht eines Deckels gemäß einer weiteren Ausführungsform.
Fig. 6a ist eine Querschnittsansicht eines Deckels mit einer Einstellvorrichtung gemäß einer Ausführungsform, die den Deckel in einer ersten geneigten Position beim Aufliegen auf einem Kochgefäß zeigt.
Fig. 6b ist eine Querschnittsansicht eines Deckels mit einer Einstellvorrichtung gemäß einer Ausführungsform, die den Deckel in einer zweiten geneigten Position beim Aufliegen auf einem Kochgefäß zeigt.
Fig. 6c ist eine Querschnittsansicht eines Deckels mit einer Einstellvorrichtung gemäß einer Ausführungsform, die den Deckel in einer waagrechten Lage beim Aufliegen auf einem Kochgefäß zeigt.
Fig. 7a ist eine Draufsicht einer Einstelleinheit für eine Einstellvorrichtüng für den Deckel gemäß einer Ausführungsform.
Fig. 7b ist eine Draufsicht einer Einstelleinheit für eine Einstellvorrichtung für den Deckel gemäß einer anderen Ausführungsform.

### Detaillierte Beschreibung

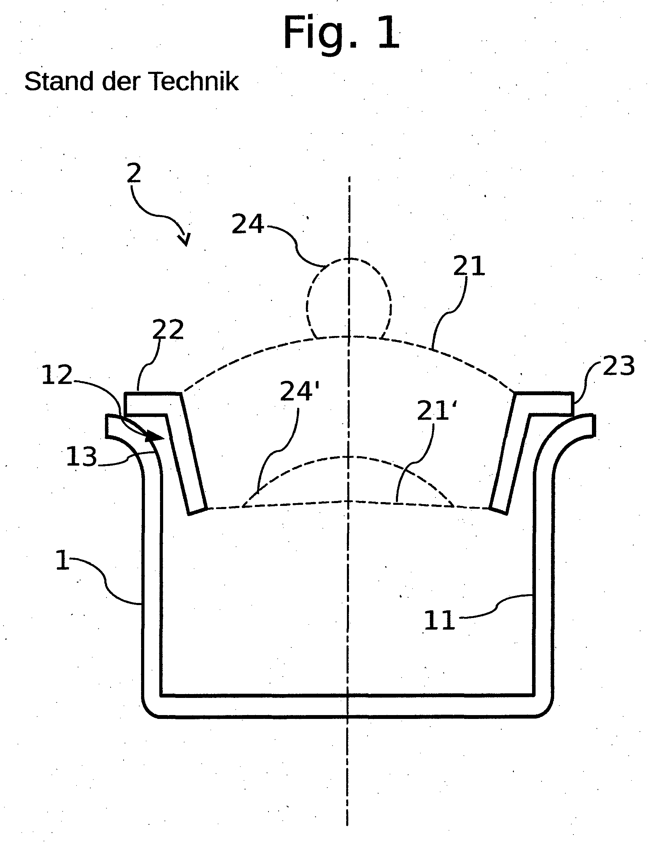

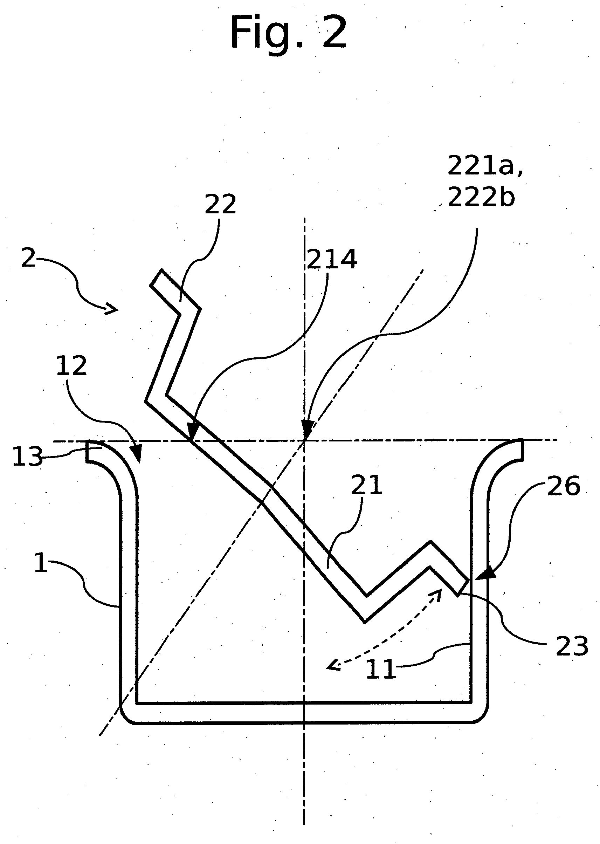

Fig. 1 ist eine Querschnittsansicht eines Deckels gemäß einer Ausführungsform, die den Deckel in einer waagrechten Position beim Aufliegen auf einem Kochgefäß zeigt. Fig. 2 ist eine Querschnittsansicht eines Deckels gemäß einer Ausführungsform, die den Deckel in einer geneigten Position beim Aufliegen auf einem Kochgefäß zeigt.

Das Kochgefäß 1 kann ein Kochtopf, eine Pfanne, ein Bräter, ein Wok, oder ähnliches sein. Das Kochgefäß 1 kann rotationssymmetrisch bzw. zylinderförmig ausgebildet sein. Das Kochgefäß kann eine elliptische oder ovale Form aufweisen.

Das Kochgefäß 1 weist eine Innenwand 11 auf, die einen Innenraum definiert, der Kochgut, wie z.B. Nudeln, Kartoffeln, Couscous, Reis, Bohnen, Erbsen, oder ähnliches, und Kochflüssigkeit, wie z.B. Wasser, Milch, oder ähnliches, zum Erhitzen auf einer Kochplatte aufnimmt.

Das Kochgefäß weist ferner eine obere Öffnung 12 auf, über die der Innenraum mit der Umgebung in Verbindung steht und befüllt bzw. entleert werden kann. Die obere Öffnung 12 ist an einer Oberseite des Kochgefäßes ausgebildet.

Die obere Öffnung 12 ist von einer Umrandung 13 umgeben, die die Form der oberen Öffnung 12 definiert. Die Umrandung 13 kann eine kreis- bzw. ringförmige bzw. elliptische Form aufweisen. Die Umrandung 13 dient ferner dazu, eine trichterförmige Aufsetz- bzw. Auflagefläche oder einen Überlappungsbereich für den Deckel 2 zu schaffen.

In Fig. 1 ist der Deckel 2 waagrecht aufliegend auf dem Kochgefäß 1 gezeigt. Diese Position entspricht dem Stand der Technik. Dabei deckt der Deckel 2 den Innenraum bzw. die obere Öffnung 12 des Kochgefäßes 1 vollständig ab. In dieser Position kann die nach oben gerichtete Seite des Deckels 2 als Oberseite des Deckels 2, die nach unten gerichtete, dem Innenraum des Kochgefäßes 1 zugewandte Seite des Deckels 2 als Unterseite des Deckels 2, definiert werden.

Der Deckel 2 kann ebenfalls im Wesentlichen symmetrisch oder rotationssymmetrisch ausgebildet sein. Der Deckel 2 kann bevorzugt eine kreisförmige bzw. ovale oder elliptische äußere Form aufweisen.

Der Deckel 2 weist eine Abdeckfläche 21 auf. Die Abdeckfläche 21 kann mittig bzw. symmetrisch zur Rotationsachse angeordnet sein. Die Abdeckfläche kann ebenfalls symmetrisch bzw. rotationssymmetrisch ausgebildet sein und sie kann ferner scheibenförmig oder diskusförmig ausgebildet sein. Die Abdeckfläche 21 weist einen Schwerpunkt, das heißt einen Massenmittelpunkt, auf. Der Massenmittelpunkt kann dem geometrischen Schwerpunkt entsprechen.

Die Abdeckfläche 21 kann nach außen, das heißt zur Oberseite des Deckels 2 hin, gewölbt sein. Alternativ kann die Abdeckfläche 21 nach innen gewölbt, das heißt zur Unterseite des Deckels 2, bzw. zum Innenraum des Kochgefäßes 1 hin, gewölbt sein. Die Abdeckfläche 21 kann in einem oberen Bereich des Deckels 2 ausgebildet sein. Die Abdeckfläche 21 kann ferner in einem unteren Bereich des Deckels 2 ausgebildet sein, wie in Fig. 1 mit 21' gekennzeichnet. Die Abdeckfläche 21 kann ferner flach sein, wie in Fig. 1 mit 21' gekennzeichnet.

Der Deckel 2 weist ferner einen ersten Randbereich 22 und einen zweiten Randbereich 23 auf. Der erste Randbereich 22 und der zweite Randbereich 23 sind in einem Umfangsbereich des Abdeckbereichs 21 angeordnet. Mit anderen Worten sind der erste Randbereich 22 und der zweite Randbereich 23 an einem äußeren bzw. umlaufenden Rand 214 des Abdeckbereichs 21 angeordnet. Der erste Randbereich 22 und der zweite Randbereich 23 können einstückig, als ein einzelner Körper, bzw. integral, ausgebildet sein. Der erste Randbereich 22 und der zweite Randbereich 23 können ferner einstückig, bzw. als ein Körper, mit dem Abdeckbereich 21 ausgebildet bzw. hergestellt sein. Der erste Randbereich 22 und der zweite Randbereich 23 umgeben bzw. umlaufen den Abdeckbereich 21 wenigstens teilweise.

Der erste Randbereich 22 und der zweite Randbereich 23 dienen zum Aufsetzen des Deckels 2 auf dem Kochgefäß 1. D.h., der Deckel 2 liegt mit dem ersten Randbereich 22 und dem zweiten Randbereich 23 auf dem Kochgefäß 1, genauer gesagt, auf der Umrandung 13, auf. Mit anderen Worten halten der erste Randbereich 22 und der zweite Randbereich 23 in der oben beschriebenen waagrechten Position den Deckel in einer waagrechten Lage bzw. Ausrichtung. Alternativ dient lediglich der erste Randbereich 22 zum Aufsetzen des Deckels auf dem Kochgefäß 1. Der erste Randbereich 22 und der zweite Randbereich 23 können dazu dienen, den Innenraum des Kochgefäßes 1 abzudichten.

Der Deckel 2 weist ferner eine Haltevorrichtung 24 oder 24', wie z.B. einen Griff, Knauf, Bügel, oder ähnliches auf, mit dem der Benutzer den Deckel 2 auf das Kochgefäß 1 legen bzw. wieder davon abnehmen kann.

Fig. 2 zeigt den Deckel 2 gemäß der Ausführungsform in einer geneigten, bzw. schrägen Position.

Wie in Fig. 2 gezeigt, ist die obere Öffnung 12 des Kochgefäßes 2 in der geneigten Position wenigstens teilweise offen bzw. freiliegend. In der geneigten Position liegt der Deckel 2 schräg auf dem Kochgefäß 1 auf.

D.h. in der geneigten bzw. schrägen Position ragt der erste Randbereich 22 des Deckels nach oben hinaus, bzw. der erste Randbereich 22 ragt über die obere Öffnung 12 des Kochgefäßen 1 hinaus und der zweite Randbereich 23 ragt in den Innenraum des Kochgefäßes 1 hinein. Dadurch entsteht ein Spalt zwischen dem Deckel 2 und dem Kochgefäß 1, genauer gesagt zwischen dem ersten und zweiten Randbereich 22 und 23 und der Umrandung 13.

Über diesen Spalt steht der Innenraum des Kochgefäßes 1 mit der Umgebung des Kochgefäßes 1 in Verbindung. Dies ermöglicht es, dass aufsteigende, sprudelnde oder schäumende Kochflüssigkeit, z.B. Wasser, mit der Umgebungsluft in Berührung kommt. Dadurch können die Bläschen platzen und es wird so verhindert, dass die Kochflüssigkeit überkocht. Gleichzeitig bleibt ein Großteil der oberen Öffnung 12 des Kochgefäßes 1 vom Deckel 2 bzw. dem Abdeckbereich 21 bedeckt, sodass die Wärmeenergie im Kochgefäß 1 gehalten wird. Ein Energieverlust wird so minimiert. Gleichzeitig wird verhindert, dass spritzendes Kochwasser aus dem Kochgefäß 1 gelangt und die Umgebung des Kochgefäßes 1, z.B. die Herdoberfläche, verunreinigt.

In der geneigten Position berührt der zweite Randbereich 23 die Innenwand 11 des Kochgefäßes 1, die den Innenraum definiert, an einem Kontaktpunkt 26 auf der Innenwand 11.

Der Deckel 2 kann waagrecht, wie in Fig. 1 gezeigt, oder schräg bzw. geneigt, wie in Fig. 2 gezeigt, auf das Kochgefäß 1 aufgesetzt werden.

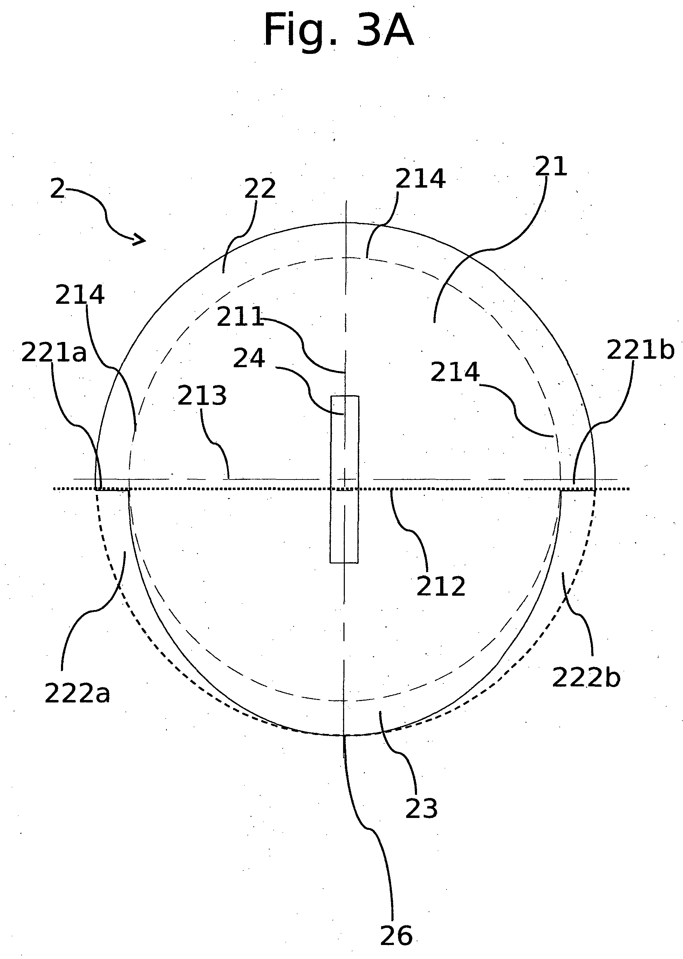

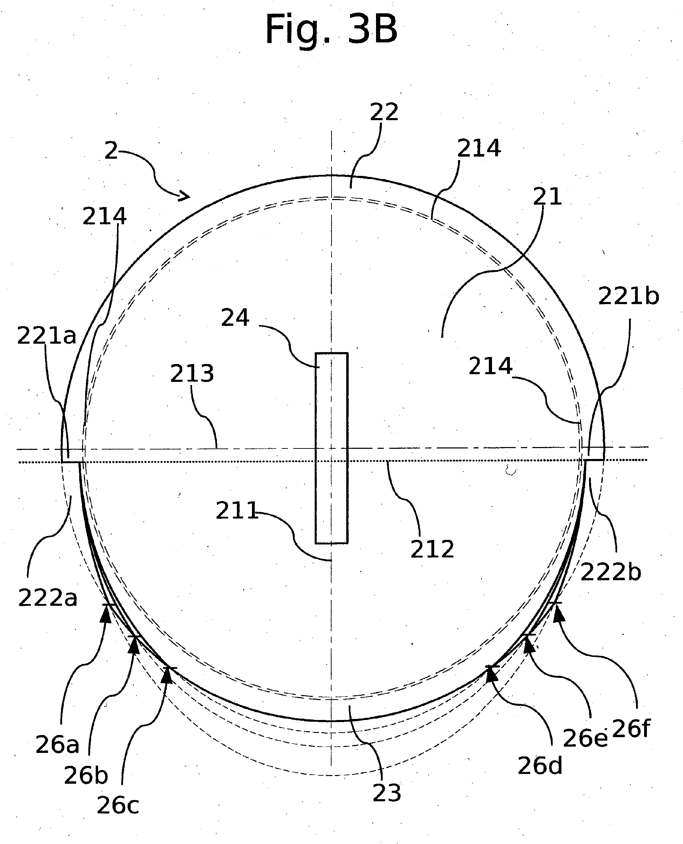

Beim Aufsetzen des Deckels 2 in die geneigte Position wird der Deckel 2 zunächst fast senkrecht, d.h. mit seiner Oberseite seitlich, ausgerichtet, mit dem zweiten Randbereich 23 zuvorderst auf das Kochgefäß 1 aufgesetzt. D.h., der zweite Randbereich 23 wird in den Innenraum 11 des Kochgefäßes 1 eingeführt bis der erste Randbereich 22 mit Auflagebereichen 221a, 221b, die weiter unten mit Bezug auf Figuren 3 bis 5 genauer beschrieben werden, mit der Umrandung 13 des Kochgefäßes 1 in Berührung kommt. Dann wird der Deckel 2 vom Benutzer losgelassen.

Mit den Auflagebereichen 221a, 221b auf der Umrandung 13 aufliegend kippt der Deckel 2 nun entweder so, dass sich der erste Randbereich 22 oder aber der zweite Randbereich 23 nach unten, zum Innenraum des Kochgefäßes hin, bewegt.

In einer Ausführungsform kippt der Deckel 2 derart, dass nach dem Aufsetzen und Loslassen des Deckels der erste Randbereich 22 nach unten und der zweite Randbereich 23 nach oben kippt, bis der zweite Randbereich 23 die Innenwand 11 so berührt, dass ein weiteres Kippen, d.h. mittels Reibschluss, verhindert wird. In dieser Position berührt der zweite Randbereich 23 die Innenwand 11 am Kontaktpunkt 26 und der erste Randbereich 22 die Umrandung 13 des Kochgefäßes an den Auflagebereichen 221a, 221b, als auch kann der Deckel ferner beidseitig mit dem Rand 214, des Abdeckbereichs 21, die Umrandung 13 berühren. Aus letzterer Berührung kann eine resultierende Gewichtskraftkomponente auf Grund der möglicherweise trichterförmigen Umrandung 13, entlang der Symmetrieachse 211 in Richtung des Kontaktpunkts 26 wirken. Eine Kippachse 212 kann durch die Auflagebereiche 221a, 221b hindurch verlaufen.

Die Kippbewegung des Deckels 2 kann durch den Benutzer gestartet und geführt werden. Die Kippbewegung kann auch dadurch erfolgen, dass der Deckel 2 auf der einen Seite der Kippachse schwerer ist als auf der anderen Seite der Kippachse. Dadurch wird über die Hebelwirkung mit Bezug auf Kippachse eine Kraft auf Deckel erzeugt, die den Deckel 2 ohne weitere äußere Einwirkung eine Kippbewegung vollziehen lässt, bis der zweite Randbereich 23 an die Innenwand 11 des Kochgefäßes 1 stößt, die dann einen Gegenkraft auf den Deckel 2 ausübt und die Kippbewegung stoppt.

Fig. 3A/B ist eine Draufsicht eines Deckels gemäß einer Ausführungsform.

Gemäß dieser Ausführungsform ist der Abdeckbereich 21 des Deckels 2 kegelförmig flach, d.h. annähernd scheibenförmig ausgebildet. Der Abdeckbereich 21 ist rotationssymmetrisch ausgebildet.

Der Abdeckbereich 21 besitzt eine erste Symmetrieachse 211, die gleichzeitig eine Symmetrieachse des Deckels 2 ist. Ferner besitzt der Abdeckbereich eine zweite Symmetrieachse 213, die rechtwinklig zur ersten Symmetrieachse 211 ist. Die erste Symmetrieachse 211 und die zweite Symmetrieachse 213 sind senkrecht zur Rotationsachse des Abdeckbereichs 21, bezüglich der, der Abdeckbereich 21 rotationssymmetrisch ist.

Der Abdeckbereich 21 weist an seinem äußeren Umfangsbereich einen seitlichen, äußeren Rand 214 auf, der kreisförmig ausgebildet ist. Vom Rand 214 des Abdeckbereichs 21 ausgehend erstrecken sich der erste Randbereich 22 und der zweite Randbereich 23 des Deckels 2 in radialer Richtung.

Der erste Randbereich 22 ist an einem ersten Kreisbogen des Rands 214 ausgebildet, der zweite Randbereich 23 ist an einem zweiten Kreisbogen des Rands 214, außerhalb des ersten Kreisbogens, ausgebildet. Der erste Kreisbogen kann größer als ein Halbkreis sein. Mit anderen Worten ist der erste Randbereich 22 auf einer ersten Seite des Abdeckbereichs 21, und der zweite Randbereich 23 auf einer zweiten Seite des Abdeckbereichs 21 ausgebildet. D.h., die erste Seite des Deckels 2 kann ausgehend vom Mittelpunkt bzw. Schwerpunkt des Abdeckbereichs 21 in horizontaler Richtung auf der einen Seite der Symmetrieachse 213 angeordnet sein, und die zweite Seite des Deckels 2 kann vom Mittelpunkt bzw. Schwerpunkt des Abdeckbereichs 21 in horizontaler Richtung auf der anderen Seite der Symmetrieachse 213 angeordnet sein. D.h., die erste Seite des Deckels 2 kann die Seite sein, auf der im Wesentlichen der erste Randbereich 22 angeordnet ist, und die zweite Seite des Deckels 2 kann die Seite sein, auf der im Wesentlichen der zweite Randbereich 23 angeordnet ist. Die erste Seite und zweite Seite können sich gegenüber liegen, mit dem Mittelpunkt des Abdeckbereichs 21 dazwischen.

In den Figuren 3 bis 5 ist die erste Seite jeweils im oberen Bereich und die zweite Seite im unteren Bereich veranschaulicht. Der erste Randbereich 22 kann symmetrisch zur ersten Symmetrieachse 211 sein. Der erste Randbereich 22 kann in Form eines offenen Rings um den Abdeckbereich 21 herum ausgebildet und auf der ersten Seite im Wesentlichen rotationssymmetrisch ausgebildet sein. D.h., er kann eine im Wesentlichen in radialer Richtung gleichbleibende Breite aufweisen.

Symmetrisch zur Symmetrieachse des Deckels 2, d.h. zur ersten Symmetrieachse 211, weist der erste Randbereich 22 zwei Auflagebereiche 221a, 221b auf. Die Auflagebereiche 221a, 221b liegen sich gegenüber. Die Auflagebereiche 221a, 221b bilden eine Kippachse 212, um die der Deckel 2, wenn er auf das Kochgefäß 1 aufgesetzt wird, bzw. auf den Auflagebereichen 221a, 221b kippt.

Die Kippachse 212 verläuft im Wesentlichen parallel zur zweiten Symmetrieachse 213 des Abdeckbereichs 21. D.h., die Kippachse 212 ist beabstandet zur zweiten Symmetrieachse 213 bzw. zum Schwerpunkt, bzw. zum geometrischen Schwerpunkt des Abdeckbereichs 21 ausgebildet.

In dem Bereich des Rands 214, an dem der erste Randbereich 22 nicht ausgebildet ist, ist der zweite Randbereich 23 ausgebildet. Der zweite Randbereich 23 kann in Form eines offenen Rings um den Abdeckbereich 21 herum ausgebildet und auf der zweiten Seite des Abdeckbereichs im Wesentlichen rotationssymmetrisch ausgebildet sein. D.h., er kann eine im Wesentlichen in radialer Richtung gleichbleibende Breite aufweisen. Der zweite Randbereich 23 kann teilweise dieselbe Breite wie der erste Randbereich 22 aufweisen.

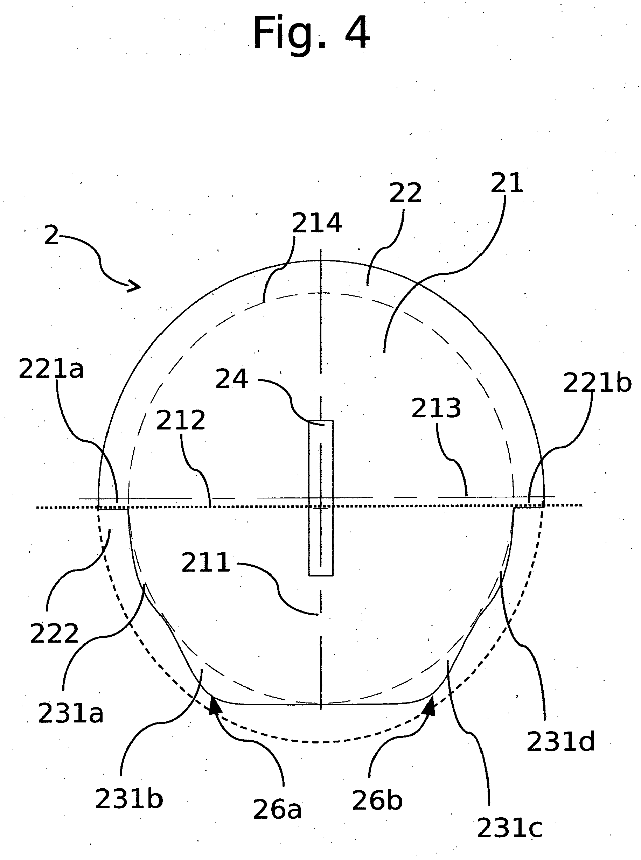

In Fig. 3A/B weist der zweite Randbereich 23 zwei Aussparungsbereiche 222a, 222b auf. Der zweite Randbereich 23 kann jedoch lediglich einen einzelnen Aussparungsbereich 222 aufweisen, wie in Fig. 4 beschrieben, oder der zweite Randbereich 23 kann mehr als zwei Aussparungsbereiche aufweisen. Die Aussparungsbereiche können aneinander grenzend oder getrennt voneinander im zweiten Randbereich 23 angeordnet sein.

Im Allgemeinen ergeben sich in den Figuren 3 bis 5 der eine oder die mehreren Aussparungsbereiche 222, 222a, 222b des zweiten Randbereichs 23 dadurch, dass zunächst ausgehend von den beiden Enden des ersten Randbereichs 22 der zweite Randbereich 23 gedanklich in derselben Breite wie der erste Randbereich 22 in Umfangsrichtung weitergeführt wird, wobei jedoch Material des zweiten Randbereichs 23 gegenüber dem Umfang des ersten Randbereichs 22 entfernt ist, sodass der oder die Aussparungsbereiche 222, 222a, 222b entstehen. D.h. der zweite Randbereich 23 ist wenigstens in den Aussparungsbereichen 222, 222a, 222b schmaler als der erste Randbereich 22. Die beiden Enden des ersten Randbereichs 22 können dabei den Auflagebereichen 221a, 221b entsprechen. Die gedankliche Weiterführung des zweiten Randbereichs 23 ist in den Figuren 3 bis 5 durch die gestrichelten äußeren Linien, die jeweils an den Auflagebereichen 221a, 221b beginnen, veranschaulicht.

Mit anderen Worten besteht der zweite Randbereich 23 aus einem oder mehreren Aussparungsbereichen 222, 222a, 222b und aus einem oder mehreren vom Abdeckbereich 21 in radialer Richtung hervorspringenden Randbereichen.

Bei der Herstellung des Deckels kann der Deckel 2 beispielsweise zunächst mit dem Abdeckbereich 21 und einem diesen vollumfänglich umgebenden und integral ausgebildeten Rand ausgebildet werden, bevor im zweiten Randbereich 23 in den Aussparungsbereichen 222, 222a, 222b Material des Rands entfernt wird, indem die Aussparungsbereiche ausgestanzt oder gefräst werden.

D.h., der äußere Rand 214 des Abdeckbereichs 21 kann wenigstens teilweise an dem einen oder mehreren Aussparungsbereichen freiliegen. Mit anderen Worten kann der zweite Randbereich 23 an den Aussparungsbereichen nicht ausgebildet sein, bzw. fehlen. Der zweite Randbereich 23 kann angrenzend zum Abdeckbereich 21 bzw. zu den Aussparungsbereichen 222, 222a, 222b in radialer Richtung zumindest teilweise schmaler oder breiter sein als der erste Randbereich 22.

Der oder die Aussparungsbereiche 222, 222a, 222b sind jeweils angrenzend an die Auflagebereiche 221a, 221b ausgebildet.

In Fig. 3A/B sind die Aussparungsbereiche 222a, 222b symmetrisch zur ersten Symmetrieachse 211 ausgebildet und sie weisen angrenzend zu den Auflagebereichen 221a, 221b eine Breite auf, die der Breite des ersten Randbereichs 22 entspricht. In Richtung zur ersten Symmetrieachse 211 und entlang des äußeren Rands 214 des Abdeckbereichs 21 werden die Aussparungsbereiche
222a, 222b immer schmaler, und somit wird die radiale Breite des zweiten Randbereichs 23 immer größer, bis die Breite des zweiten Randbereichs 23 der Breite des ersten Randbereichs 22 im wesentlichen entspricht oder größer werden kann. Die genaue Breite ist messtechnisch zu ermitteln, wie später beschrieben.

In der Ausführungsform des Deckels von Fig. 3A/B ragt der zweite Randbereich 23 zwischen den Auflagebereichen 221a, 221b in einer elliptischen Form vom äußeren Rand 214 des Abdeckbereichs 21 hervor. D.h. der zweite Randbereich 23 kann begrenzt werden durch den Kreisbogen 214 des Abdeckbereichs 21 und einem Ellipsenbogen als Außenkante. Anders ausgedrückt, kann der zweite Randbereich 23 eine halbmondartige bzw. sichelartige Form aufweisen.

In den Figuren 3 und 4 umgibt der erste Randbereich 22 den Abdeckbereich 21 zu mehr als 50%, und der Randbereich 22 weist eine gleichbleibende Breite in radialer Richtung auf.

Der Kontaktpunkt 26 liegt in der Ausführungsform des Deckels, wie in Fig. 3A gezeigt, auf der ersten Symmetrieachse 211.

Gemäß der in Fig. 3A/B gezeigten Ausführungsform wird von einer möglichst einfachen Umsetzung der Erfindung ausgegangen. Die reale elliptische Schnittlinie wird dabei durch das Zentrum der langen Halbachse vom Zentrum zum Endpunkt, sowie die kurze Halbachse vom Zentrum zu den Einkerbungen festgelegt. Die Länge der langen Halbachse ist hier über einen geeigneten Prototypen, bei dem der Rand halbseitig komplett ausgestellt ist, messtechnisch mit einer Schieblehre oder ähnlichem zu ermitteln. Hierbei hat der, der entweichenden Dampfmenge proportionale Drehwinkel bereits festgelegt zu sein. Um eine sinnvolle technische Umsetzung zu ermöglichen, ist eine elliptische Form zu wählen, die zu der realen Schnittlinie eine Toleranz aufweist. Dies ist zum Beispiel möglich, in dem die Endpunkte der Halbachse, welche, die Ellipsenform definieren, auf die Mittellinie des Deckelkörpers verschoben werden. Hierdurch wird unter Beibehaltung der langen Halbachse eine geringfügig gestrecktere Form erreicht, die sich damit unter Toleranz in das Kochgefäß einpasst.

Fig. 4 ist eine Draufsicht eines Deckels gemäß einer anderen Ausführungsform.

Gemäß der in Fig. 4 gezeigten Ausführungsform weist der zweite Randbereich 23 mehrere Vorsprünge 231a, 231b, 231c, 231d, die sich ausgehend vom Abdeckbereich 21, genauer gesagt, ausgehend vom äußeren Rand 214 des Abdeckbereichs 21 in radialer Richtung erstrecken, und einen Aussparungsbereich 222 auf, der in Umfangsrichtung zwischen dem ersten Auflagebereich 221a und dem zweiten Auflagebereich 221b zusammenhängend ausgebildet ist. Die Vorsprünge 231a, 231b, 231c, 231d sind symmetrisch zur ersten Symmetrieachse 211 ausgebildet.

In dieser Ausführungsform berührt der Deckel 2, insbesondere der zweite Randbereich 23 mit seinen Vorsprüngen 231b, 231c die Innenwand 11 des Kochgefäßes 1 beim schrägen bzw. geneigten Aufliegen an den zwei Kontaktpunkten 26a, 26b.

In den Figuren 3 und 4 liegen sowohl die Auflagebereiche 221a, 221b als auch die Aussparungsbereiche 222a, 222b und die Kippachse 212 auf derselben Seite (der zweiten Seite des Deckels 2) der zweiten Symmetrieachse 213. Die Auflagebereiche 221a und 221b liegen sich parallel zur ersten Symmetrieachse 211 gegenüber. Der Schwerpunkt, d.h. der Massenmittelpunkt, des Deckels 2 kann sich gegenüberliegend auf der ersten Seite befinden. Mit anderen Worten bewirken die Aussparungsbereiche 222, 222a, 222b gemäß den in den Figuren 3 und 4 gezeigten Ausführungsformen, dass der Deckel 2 so auf dem Kochgefäß 1 in einer geneigten Position aufliegt, dass er im Gegensatz zum Stand der Technik, in dieser Position in seiner Bewegung blockiert ist. Der Deckel 2 liegt nämlich einerseits aufgrund der Schwerkraft auf den Auflagepunkten 221a, 221b auf. Andererseits wird der Deckel 2 gleichzeitig am Kontaktpunkt 26 auf der Seite des zweiten Randbereichs 23 aufgrund der Hebelkraft von unten gegen die Innenwand 11 des Kochgefäßes 1 gedrückt, da sich der Schwerpunkt des Deckels 2 nicht auf der Kippachse 212, sondern auf der ersten Seite des Deckels 2, also beabstandet von der Kippachse 212 auf der Seite des ersten Randbereichs 22, befindet.

Andererseits bewirken die Aussparungsbereiche 222, 222a, 222b in den Figuren 3 und 4, dass der Deckel 2 bei einem schrägen Auflegen auf der Oberseite des Kochgefäßes zu einem größeren Anteil als im Stand der Technik in den Innenraum des Kochgefäßes hineinragt, bzw. dass sich ein größerer Anteil des Deckels 2 unterhalb der Umrandung 13 des Kochgefäßes 1 befindet. Damit nimmt der Deckel 2 eine gegenüber Einwirkungen durch den Benutzer, z.B. durch Stöße, oder aufgrund des Kochens der Kochflüssigkeit und des Kochgutes, z.B. durch Sprudeln und Schäumen, stabilere Position ein.

Somit kann der Deckel 2, im Gegensatz zum Stand der Technik, durch Vibrationen, ausgelöst beispielsweise durch das Sprudeln der Kochflüssigkeit, nicht mehr bewegt werden, sondern verbleibt in der geneigten Position. Ein Zurückrutschen des Deckels 2 in die waagrechte Position wird dadurch verhindert.

Bei der in Fig. 4 gezeigten Ausführungsform ist vorteilhaft, dass der Aussparungsbereich 222 mittig zwischen den Vorsprüngen 231d und 231c vorhanden ist. Damit kann der Deckel 2 gleichzeitig als Seiher verwendet werden, wenn das Kochgut, beispielsweise Nudeln, nach dem Kochen abgegossen werden. Dazu verbleibt der Deckel nach dem Kochen auf dem Kochgefäß 1, beispielsweise einem Kochtopf. Der Benutzer kann den Deckel auf die Umrandung 13 des oberen Öffnung 12 drücken und gleichzeitig das Kochgefäß 1 zusammen mit dem Deckel 2 parallel zur Kippachse 212 kippen, sodass die Kochflüssigkeit, beispielsweise Wasser, aus dem Spalt zwischen dem Deckel 2 und dem Kochgefäß 1, genauer gesagt, durch den mittigen Aussparungsbereich 222 aus dem Kochgefäß 1 heraus fließen und somit abgegossen werden.

Gemäß der in Fig. 4 gezeigten Ausführungsform wird eine Form des Rands gewählt, bei der dieser zwei Punkte mit der realen elliptischen Schnittlinie gemeinsam hat um ein mittiges Abgießen des flüssigen Mediums zu ermöglichen. Die Stützpunkte der Spline- oder Spline-ähnlichen Form sind dabei so zu wählen, dass zwei oder mehrere Punkte symmetrisch auf der elliptischen Schnittlinie liegen und die Form zugleich auf dem Rand, jedoch innerhalb oder gleich der elliptischen Schnittlinie liegen.

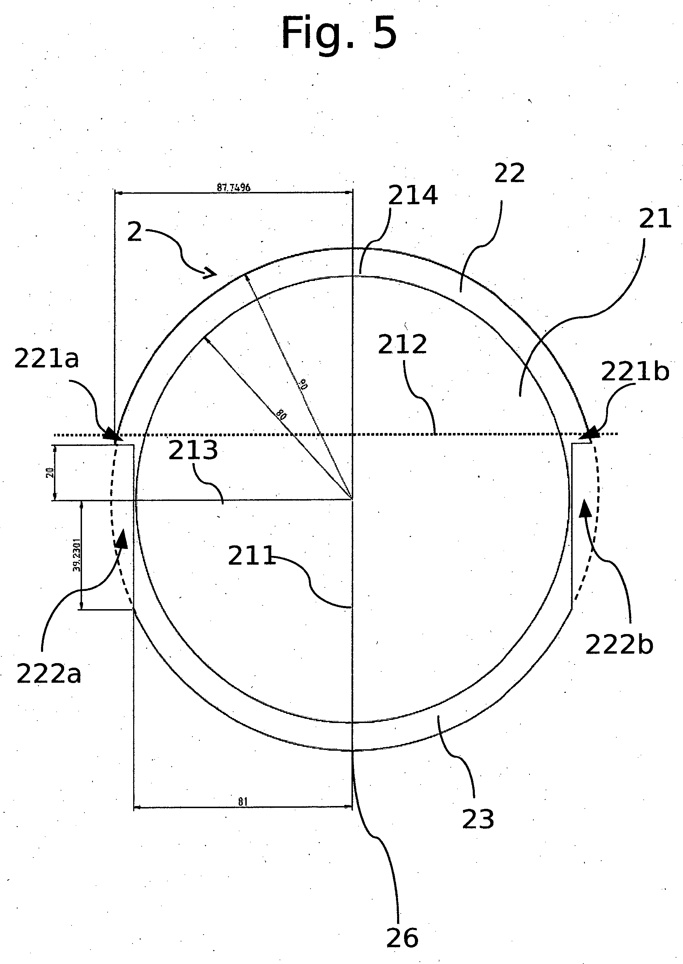

Fig. 5 ist eine Draufsicht eines Deckels gemäß einer weiteren Ausführungsform.

In der in Fig. 5 gezeigten Ausführungsform weist der zweite Randbereich 23 zwei Aussparungsbereiche 222a, 222b auf. Diese sind ebenso wie in den in den Figuren 3 und 4 gezeigten Ausführungsformen symmetrisch zur ersten Symmetrieachse 211 ausgebildet. Wie in den in den Figuren 3 und 4 gezeigten Ausführungsformen sind die Aussparungsbereiche 222a, 222b jedoch nicht rotationssymmetrisch.

Wie in Fig. 5 gezeigt, sind die Aussparungsbereiche 222a, 222b in tangentialer Richtung ausgebildet, wobei die tangentiale Richtung entlang der Tangente am Schnittpunkt des äußeren Rands 214 des Abdeckbereichs 21 und der zweiten Symmetrieachse 213 verläuft.

Wie in Fig. 5 ferner gezeigt, umgibt der zweite Randbereich .23 den Abdeckbereich 21 zu mehr als 50 %. Mit anderen Worten liegt die Kippachse 212 in Fig. 5 auf der Seite des ersten Randbereichs 22, d.h., die Kippachse 212 befindet sich auf der ersten Seite des Deckels 2. D.h., die Kippachse 212 befindet sich auf der im Vergleich zu den Ausführungsformen der Figuren 3 und 4 anderen Seite der zweiten Symmetrieachse 213. Der Schwerpunkt kann sich also im Bereich der zweiten Seite des Deckels 2 befinden.

In dieser Ausführungsform kann der Deckel 2 beim Aufliegen mit seinen Auflagebereichen 221a, 221b auf der Umrandung 13 des Kochgefäßes 1 über den Kontaktpunkt 26 den Boden des Kochgefäßes 1 berühren, da der Deckel 2 so lange kippt, bis der Kontaktpunkt 26 vom Boden des Kochgefäßes 1 entgegen der Kipprichtung gestützt wird.

In Fig. 5 liegen die Auflagebereiche 221a, 221b und die Kippachse 212 auf derselben Seite der zweiten Symmetrieachse 213 und die Aussparungsbereiche 222a, 222b liegen zumindest teilweise auf der anderen Seite der Symmetrieachse 213. Die Auflagebereiche 221a und 221b liegen sich entlang der Kippachse 212, also parallel zur zweiten Symmetrieachse 213, gegenüber.

Gemäß der in Fig. 5 gezeigten Ausführungsform ist ein Deckel für Kochgefäße mit einem Durchmesser von 160mm angegeben. Er kann aus Edelstahl gefertigt sein. In der Regel ist von einem etwas größeren Innendurchmesser des Kochgefäßes auszugehen. Der innere Kreis mit Durchmesser von 80mm beschreibt den durch Pressen um ca. 5mm nach unten gesenkten Anteil des Deckels. Ein Haltegriff soll am Deckel angebracht sein, er wird in Fig. 5 aber nicht gezeigt. Parallel zur Drehachse des Deckels ist, im Abstand von 20mm rechts und links eine Aussparung bzw. Einkerbung, im erhöhten Rand des Deckels, der auf dem Topf aufliegt, zu sehen.

Eine weitere Ausführungsform entspricht im Wesentlichen der vorstehend beschriebenen Ausführungsform, mit dem Unterschied dass, der mit 20mm angegebene Abstand, der Parallelverschiebung, der in der Zeichnung waagrecht liegenden Drehachse, rechnerisch oder experimentell auf einen geeigneten Wert gebracht wird, so dass der Deckel nicht weiter als circa 20mm (in der Zeichnung unten) in das Kochgefäß ragt.

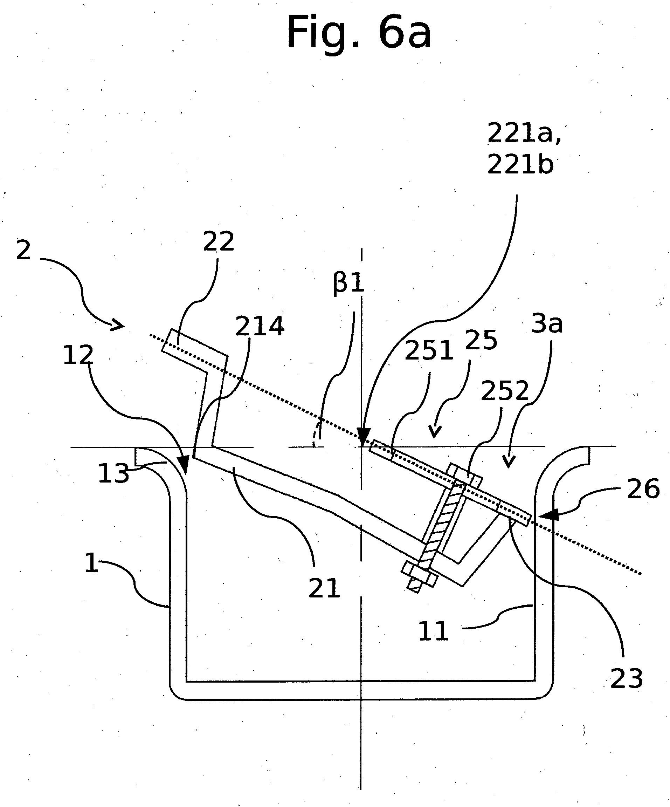

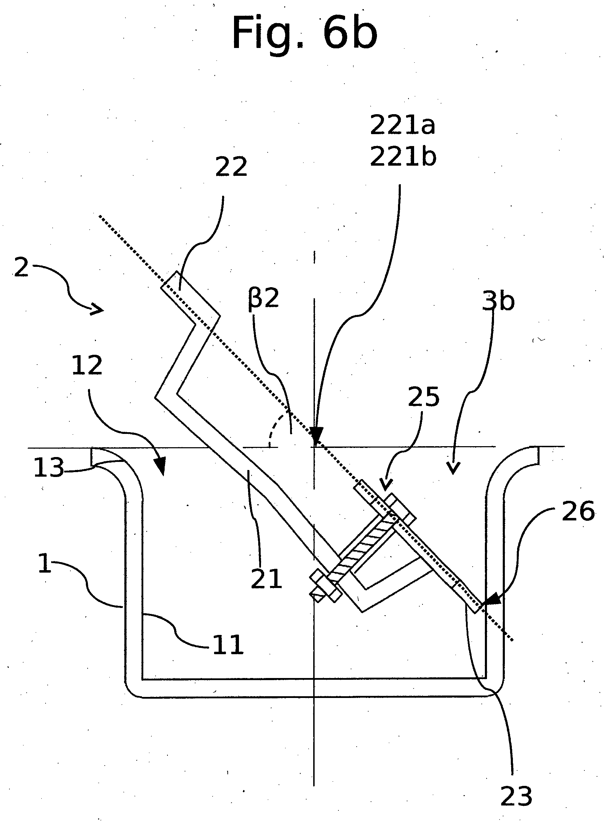

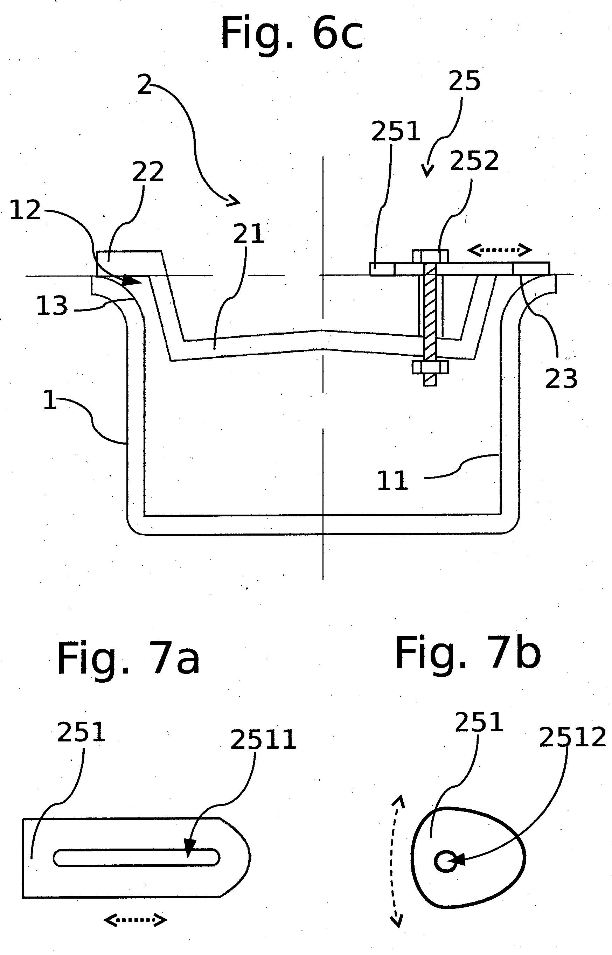

Fig. 6a ist eine Querschnittsansicht eines Deckels mit einer Einstellvorrichtung gemäß einer Ausführungsform, die den Deckel in einer ersten geneigten Position beim Aufliegen auf einem Kochgefäß zeigt. Fig. 6b zeigt den Deckel in einer zweiten geneigten Position beim Aufliegen auf einem Kochgefäß, und Fig. 6c zeigt den Deckel in einer waagrechten Lage beim Aufliegen auf einem Kochgefäß.

Gemäß der Ausführungsform der Figuren 6a, 6b und 6c weist der Deckel 2 eine Einstellvorrichtung 25 auf. Die Einstellvorrichtung 25 ist auf der Seite des zweiten Randbereichs 23 angeordnet. Jedoch kann sich gemäß anderen Ausführungsformen die Einstellvorrichtung 25 auch auf der Seite des ersten Randbereichs 22 befinden. Die Einstellvorrichtung kann am ersten Randbereich 22, am zweiten Randbereich 23, oder am Abdeckbereich 21 angeordnet sein.

Mithilfe der Einstellvorrichtung 25 kann der Kontaktpunkt 26 auf der Innenwand 11 des Kochgefäßes 1 eingestellt werden, an dem der zweite Randbereich 23 die Innenwand 11 des Kochgefäßes 1 berührt. Beispielsweise kann mithilfe der Einstellvorrichtung die äußere Form, d.h. ein äußerer Rand des Deckels 2, verändert werden. Genauer gesagt kann damit ein äußerer Rand des zweiten Randbereichs 23 so verändert werden, sodass sich beim Aufsetzen des Deckels auf das Kochgefäß 1 und dem anschließenden Kippen unterschiedliche Positionen, d.h. unterschiedliche Winkel zur Waagrechten, ergeben, an dem die Kippbewegung, d.h. die Rotation um die Kippachse 212, gestoppt bzw. blockiert wird.

Mit anderen Worten ist mittels der Einstellvorrichtung 25 der Abstand zwischen dem Mittelpunkt des Deckels 2, bzw. dem Mittelpunkt oder Schwerpunkt des Abdeckbereichs 21, und dem Kontaktpunkt 26 des Deckels 2 an der Innenwand 11 des Kochgefäßes 1 veränderbar.

Mittels der Einstellvorrichtung 25 können mindestens zwei geneigte Positionen einstellbar sein.

Fig. 6a zeigt den Deckel mit der Einstellvorrichtung 25 in einer ersten Position 3a mit einem Winkel β1 zur Waagrechten, und Fig. 6b zeigt den Deckel mit der Einstellvorrichtung 25 in einer zweiten Position 3b mit einem Winkel β2 zur Waagrechten, wobei die Beziehung 0°<β1< β2. Fig. 7 zeigt den Deckel mit der Einstellvorrichtung 25 in einer waagrechten Position.

Mittels der Einstellvorrichtung 25 sind also verschiedene schräge bzw. geneigte Positionen des Deckels 2 auf dem Kochgefäß 1 einstellbar. Abhängig vom Winkel des Deckels 2 zur Waagrechten, also wenn der Deckel 2 schräg auf dem Kochgefäß 1 aufliegt, ergeben sich unterschiedlich große Spalte zwischen den Kochgefäß 1 und dem Deckel 2. Somit kann die teilweise Öffnung bzw. die Kipplage des Kochgefäßes 1 aufgrund des schräg aufliegenden Deckels 2 an die Verhältnisse beim Kochen, z.B. Art und Menge des Kochgutes, Art und Menge der Kochflüssigkeit, Art und Größe des Kochgefäßes, Hitzemenge, und so weiter, angepasst werden.

Die Einstellvorrichtung 25 kann ein Einstellelement 251 und ein Feststellelement 252 aufweisen. Das Feststellelement 251 kann eine Schraube, einen Stift, eine Klammer, eine Niete, oder ähnliches sein.

Figuren 7a und 7b zeigen verschiedene Ausführungsformen des Einstellelements 251 in Draufsicht. Das Einstellelement 251 hat im Wesentlichen eine flache Form und kann eine längliche Form, wie in Fig. 7a gezeigt, oder eine runde, elliptische oder ovale Form, wie in Fig. 7b gezeigt, aufweisen. Das Einstellelement 251 verändert die Form des zweiten Randbereichs 23 bzw. den Abstand des Kontaktpunkts 26 vom Mittelpunkt, wie oben beschrieben. Das Feststellelement 252 arretiert bzw. fixiert das Einstellelement 251 in der vom Benutzer gewünschten Position. Zum Einstellen der geneigten Position wird das Feststellelement 252 zunächst entfernt bzw. gelockert, sodass sich das Einstellelement in zumindest einer Richtung frei bewegen kann. In Fig. 7a bewegt sich das Einstellelement 251 beim Einstellen entlang der durch den Doppelpfeil gekennzeichneten Richtung. Durch den Schlitz 2511 kann beispielsweise eine Schraube zum Arretieren bzw. Fixieren der eingestellten Position geführt werden und dort während des Einstellvorgangs verbleiben. Beim Einstellelement 251 gemäß der in Fig. 7a gezeigten Ausführungsform berührt das Einstellelement 251 die Innenseite 11 des Kochgefäßes 1 immer am selben Kontaktpunkt 26, der sich nach Fig. 6a oder 6b im Kochgefäß nach oben und unten bewegt, je nach Einstellung. Dieser ist zu gleich je nach Einstellung, unterschiedlich weit vom Mittelpunkt des Deckels 2, bzw. des Abdeckbereichs 21, entfernt.

In Fig. 7b lässt sich das Einstellelement 251 bei Einstellen um einen Drehpunkt herum, der durch das Loch 2512 definiert wird. Durch das Loch 2512 kann ebenfalls eine Schraube oder ähnliches hindurch geführt werden. Beim Einstellelement 251 gemäß der in Fig. 7b gezeigten Ausführungsform berührt das Einstellelement 251 die Innenseite 11 des Kochgefäßes 1 abhängig von der Einstellung immer mit einem anderen, also veränderlichen, Kontaktpunkt 26 am äußeren Rand des Einstellelements 251.

Nach dem Einstellen wird das Feststellelement 252 wieder am Deckel 2 angebracht bzw. wieder festgestellt, sodass die Position des Einstellelements 251 fixiert wird.

Alternativ zu den in den Figuren 7a und 7b gezeigten Einstellvorrichtungen kann gemäß einer anderen Ausführungsform ein in einer Halterung eingebrachter radial magnetisierter Ringmagnet auf dem Abdeckbereich 21 des Deckels 2 befestigt sein. Dieser dient als Führung für einen alternierend magnetisierten Stab bei verschiedener Pollage zwischen Stab und Führung, in der Führung einrastet oder in die nächste Stellung rutscht, um somit eine Einstellung zu ermöglichen.

### Bezugszeichenliste

(1) Kochgefäß, meist Kochtopf
(11) Innere Wand des Kochgefäßes
(12) obere Öffnung des Kochgefäßes
(13) Umrandung der oberen Öffnung
(111) eine Symmetrieachse eines zylinderförmigen Kochgefäßes
(2) Deckel für ein Kochgefäß
(21) Abdeckbereich des Deckels (21' anders geformt)
(211) erste Symmetrieachse des Abdeckbereichs 21
(212) Kipp- oder Drehachse des Deckels
(213) zweite Symmetrieachse des Abdeckbereichs 21
(214) Umrandung des Abdeckbereichs 21
(22) erster Randbereich des Deckels
(221) Auflagebereiche des Randbereichs des Deckels, (möglich: a und b symm. zu 211)
(222) Aussparungsbereich(e) des Randbereichs des Deckels, (möglich: a und b symm. zu 211)
(23) zweiter Randbereich des Deckels
(231) Vorsprünge des zweiten Randbereichs, (möglich: a,b symm. bzgl. 211 zu d,c)
(24) Haltegriff des Deckels (24' anders geformt)
(25) Einstellvorrichtung für den Kontaktpunkt 26
(251) Feststellelement der Einstellvorrichtung 25
(2511) Langloch im Feststellelement 251
(252) Feststellelement der Einstellvorrichtung 25
(2522) Loch im Feststellelement 251
(26) Kontaktpunkt(e) des Deckels 2 mit der Innenwand 11 (möglich: a und b symm. zu 211)
(3a) geneigte Position des Deckels 2 im Winkel β1
(3b) geneigte Position des Deckels 2 im Winkel β2
(β1) Neigungswinkel zwischen Ebene durch Umrandung 13 und Symmetrieachse 211
(β2) Neigungswinkel zwischen Ebene durch Umrandung 13 und Symmetrieachse 211

## Patentansprüche

1. Deckel für ein Kochgefäß (1), wobei das Kochgefäß (1) eine obere Öffnung (12) aufweist, wobei der Deckel (2) einen Abdeckbereich (21) zum Bedecken der oberen Öffnung (12), einen ersten Randbereich (22) und einen zweiten Randbereich (23) aufweist, wobei der erste Randbereich (22) und der zweite Randbereich (23) den Abdeckbereich (21) wenigstens teilweise umgeben, und wobei der erste Randbereich (22) zum Aufsetzen auf eine Umrandung (13) der oberen Öffnung (12) ausgebildet ist,
wobei der erste Randbereich (22) zwei Auflagebereiche (221a, 221b) enthält, auf denen der Deckel (2) in einem geneigten Zustand aufliegt, und die Auflagebereiche (221a, 221b) in einem vordefinierten Bereich zur Symmetrieachse (211) des Deckels (2) ausgebildet sind und sich gegenüberliegen, und
wobei der zweite Randbereich (22) einen oder mehrere Aussparungsbereiche (222, 222a, 222b) aufweist, der oder die jeweils an die Auflagebereiche (221a, 221b) angrenzen, sodass der Deckel beim Aufsetzen mit seinem ersten Randbereich (22) auf die Umrandung (13) der oberen Öffnung (12) des Kochgefäßes (1) schräg zum Liegen kommt.

2. Deckel gemäß Anspruch 1, wobei der erste Randbereich (22) beim schrägen Aufliegen über die obere Öffnung (12) des Kochgefäßes (1) hinaus ragt.

3. Deckel gemäß Anspruch 1 oder 2, wobei der zweite Randbereich (23) beim schrägen Aufliegen in den Innenraum des Kochgefäßes (1) hineinragt.

4. Deckel gemäß einem der vorhergehenden Ansprüche, wobei der oder die Aussparungsbereiche (222, 222a, 222b) angrenzend zu den Auflagebereichen (221a, 221b) eine Breite aufweisen, die dem ersten Randbereich (22) entspricht.

5. Deckel gemäß einem der vorhergehenden Ansprüche, wobei der zweite Randbereich (23) angrenzend zum Abdeckbereich (21) und/oder zu den Aussparungsbereichen (222, 222a, 222b) in radialer Richtung zumindest teilweise schmaler ist als der erste Randbereich (22).

6. Deckel gemäß einem der vorhergehenden Ansprüche, wobei der erste Randbereich (22) den Abdeckbereich (21) zu wenigstens 50% mit gleichbleibender Breite in radialer Richtung umgibt.

7. Deckel gemäß einem der vorhergehenden Ansprüche, wobei der Abdeckbereich (21) im zweiten Randbereich (23) an den Aussparungsbereichen (222, 222a, 222b) wenigstens teilweise freiliegt.

8. Deckel gemäß einem der vorhergehenden Ansprüche, wobei die gegenüberliegenden Auflagebereiche (221a, 221b) eine Kippachse (212) des Deckels (2) bilden.

9. Deckel gemäß Anspruch 8, wobei die Kippachse (212) des Deckels (2) parallel zu einer Symmetrieachse (213) des Abdeckbereichs (21) verläuft.

10. Deckel gemäß Anspruch 8 oder 9, wobei die Kippachse (212) beabstandet zur Symmetrieachse (213) und/oder zum Mittelpunkt des Abdeckbereichs (21) ist.

11. Deckel gemäß einem der vorhergehenden Ansprüche, wobei ein äußerer Rand des Abdeckbereichs (21) wenigstens teilweise an dem einen oder mehreren Aussparungsbereichen (222, 222a, 222b) freiliegt.

12. Deckel gemäß einem der vorhergehenden Ansprüche, wobei der zweite Randbereich (23) zwischen den Auflagebereichen (221a, 221b) elliptisch vom Abdeckbereich (21) hervorragt.

13. Deckel gemäß einem der vorhergehenden Ansprüche, wobei der erste Randbereich (22) symmetrisch zur Symmetrieachse (211) des Deckels (2) ist.

14. Deckel gemäß einem der vorhergehenden Ansprüche, wobei der zweite Randbereich (23) wenigstens einen oder mehrere Vorsprünge (231a, 231b, 231c, 231d) aufweist, die sich vom Abdeckbereich (21) aus in radialer Richtung erstrecken.

15. Deckel gemäß Anspruch 14, wobei der und/oder die Vorsprünge (231a, 231b, 231c, 231d) symmetrisch zur Symmetrieachse (211) des Deckels (2) am Abdeckbereich (21) ausgebildet sind.

16. Deckel gemäß einem der vorhergehenden Ansprüche, wobei der Deckel (2) mindestens eine geneigte Position (3a, 3b) einnimmt, in der der Deckel (2) an den Auflagebereichen (221a, 221b) auf der Umrandung (13) der oberen Öffnung (12) des Kochgefäßes (1) aufliegt und der zweite Randbereich (23) eine Innenwand (11) des Kochgefäßes (1) berührt.

17. Deckel gemäß Anspruch 16, wobei der Deckel (2) in der mindestens einen geneigten Position (3a, 3b) eine Neigung mit einem Neigungswinkel (β1, β2) von,mehr als 0° zur Waagrechten einnimmt.

18. Deckel gemäß einem der vorhergehenden Ansprüche, wobei am zweiten Randbereich (23) und/oder am Abdeckbereich (21) eine Einstellvorrichtung (25) angeordnet ist, mittels der mindestens zwei verschiedene geneigte Positionen (3a, 3b) mit entsprechenden Neigungswinkeln (β1, β2) von mehr als 0° zur Waagrechten einstellbar sind.

19. Deckel gemäß Anspruch 18, wobei mittels der Einstellvorrichtung (25) der Abstand vom Mittelpunkt zu einem Kontaktpunkt (26) des Deckels (2) an der Innenwand (11) des Kochgefäßes (1) veränderbar ist, sodass der Deckel (2) beim geneigten Aufsetzen verschiedene geneigte Positionen (3a, 3b) einnehmen kann.

20. Deckel gemäß Anspruch 18 oder 19, wobei die Einstellvorrichtung (25) ein Einstellelement (251) und ein Feststellelement (252) aufweist.

21. Kochgefäß mit einem Deckel (2) gemäß einem der vorhergehenden Ansprüche 1-20.

22. Kochgefäß nach Anspruch 21, wobei das Kochgefäß ein Kochtopf, ein Bräter oder eine Pfanne ist.

## Geänderte Patentansprüche

### Geänderte Patentansprüche gemäss Regel 137(2) EPÜ.

1. Deckel für ein Kochgefäß (1), wobei das Kochgefäß (1) eine obere Öffnung (12) aufweist, wobei der Deckel (2) einen Abdeckbereich (21) zum Bedecken der oberen Öffnung (12), einen ersten Randbereich (22) und einen zweiten Randbereich (23) aufweist, wobei der erste Randbereich (22) und der zweite Randbereich (23) den Abdeckbereich (21) wenigstens teilweise umgeben, und wobei der erste Randbereich (22) zum Aufsetzen auf eine Umrandung (13) der oberen Öffnung (12) ausgebildet ist,
wobei der erste Randbereich (22) zwei Auflagebereiche (221a, 221b) enthält, auf denen der Deckel (2) in einem geneigten Zustand aufliegt, und die Auflagebereiche (221a, 221b) in einem vordefinierten Bereich zur Symmetrieachse (211) des Deckels (2) ausgebildet sind und sich gegenüberliegen, und
wobei der zweite Randbereich (22) einen oder mehrere Aussparungsbereiche (222, 222a, 222b) aufweist, der oder die jeweils an die Auflagebereiche (221a, 221b) angrenzen, sodass der Deckel beim Aufsetzen mit seinem ersten Randbereich (22) auf die Umrandung (13) der oberen Öffnung (12) des Kochgefäßes (1) schräg zum Liegen kommt.

2. Deckel gemäß Anspruch 1, wobei der erste Randbereich (22) beim schrägen Aufliegen über die obere Öffnung (12) des Kochgefäßes (1) hinaus ragt.

3. Deckel gemäß Anspruch 1 oder 2, wobei der zweite Randbereich (23) beim schrägen Aufliegen in den Innenraum des Kochgefäßes (1) hineinragt.

4. Deckel gemäß einem der vorhergehenden Ansprüche, wobei der oder die Aussparungsbereiche (222, 222a, 222b) angrenzend zu den Auflagebereichen (221a, 221b) eine Breite aufweisen, die dem ersten Randbereich (22) entspricht.

5. Deckel gemäß einem der vorhergehenden Ansprüche, wobei der zweite Randbereich (23) angrenzend zum Abdeckbereich (21) und/oder zu den Aussparungsbereichen (222, 222a, 222b) in radialer Richtung zumindest teilweise schmaler ist als der erste Randbereich (22).

6. Deckel gemäß einem der vorhergehenden Ansprüche, wobei der erste Randbereich (22) den Abdeckbereich (21) zu wenigstens 50% mit gleichbleibender Breite in radialer Richtung umgibt.

7. Deckel gemäß einem der vorhergehenden Ansprüche, wobei der Abdeckbereich (21) im zweiten Randbereich (23) an den Aussparungsbereichen (222, 222a, 222b) wenigstens teilweise freiliegt.

8. Deckel gemäß einem der vorhergehenden Ansprüche, wobei die gegenüberliegenden Auflagebereiche (221a, 221b) eine Kippachse (212) des Deckels (2) bilden.

9. Deckel gemäß Anspruch 8, wobei die Kippachse (212) des Deckels (2) parallel zu einer Symmetrieachse (213) des Abdeckbereichs (21) verläuft.

10. Deckel gemäß Anspruch 8 oder 9, wobei die Kippachse (212) beabstandet zur Symmetrieachse (213) und/oder zum Mittelpunkt des Abdeckbereichs (21) ist.

11. Deckel gemäß einem der vorhergehenden Ansprüche, wobei ein äußerer Rand des Abdeckbereichs (21) wenigstens teilweise an dem einen oder mehreren Aussparungsbereichen (222, 222a, 222b) freiliegt.

12. Deckel gemäß einem der vorhergehenden Ansprüche, wobei der zweite Randbereich (23) zwischen den Auflagebereichen (221a, 221b) zumindest teilweise elliptisch vom Abdeckbereich (21) hervorragt.

13. Deckel gemäß einem der vorhergehenden Ansprüche, wobei der zweite Randbereich (23) wenigstens einen oder mehrere Vorsprünge (231a, 231b, 231c, 231d) aufweist, die sich vom Abdeckbereich (21) aus in radialer Richtung erstrecken.

14. Deckel gemäß einem der vorhergehenden Ansprüche, wobei der Deckel (2) mindestens eine geneigte Position (3a, 3b) einnimmt, in der der Deckel (2) an den Auflagebereichen (221a, 221b) auf der Umrandung (13) der oberen Öffnung (12) des Kochgefäßes (1) aufliegt und der zweite Randbereich (23) eine Innenwand (11) des Kochgefäßes (1) in mindestens einem Kontaktpunkt (26, 26a, 26b, 26c, 26e, 26f) berührt.

15. Deckel gemäß Anspruch 14, wobei der Deckel (2) in der mindestens einen geneigten Position (3a, 3b) eine Neigung mit einem Neigungswinkel (β1, β2) von mehr als 0° zur Waagrechten einnimmt.
